# EUROPÄISCHE PATENTANMELDUNG

(11) **EP 4 648 274 A1**
(43) Veröffentlichungstag der Anmeldung: **12.11.2025**
(21) Anmeldenummer: 25174745.7
(22) Anmeldetag: 07.05.2025
(51) Int. Cl.: H02S 20/10, F24S 25/35, F24S 25/37, H02S 40/10, F24S 20/00, F24S 25/00

(54) **SCHIENENPROFIL UND TRAGWERKMODUL FÜR EIN SOLARMODUL UND EIN WARTUNGSMODUL**

(30) Priorität: 10.05.2024 CH 5192024
(71) Anmelder: Ott, Christoph, 3076 Worb (CH)
(72) Erfinder: Ott, Christoph, 3076 Worb (CH)
(74) Vertreter: BOVARD AG

(57) **Zusammenfassung**

Die Erfindung betrifft ein Schienenprofil (100) zur Aufnahme zumindest eines Solarmoduls (10) und zumindest eines Wartungsmoduls (20) umfassend eine Basis (101) mit einer Grundfläche (102) und an der Grundfläche angeordnet eine Solarmodulschiene (110) mit einer ersten Lauffläche (111), auf welcher das Solarmodul in Längsrichtung des Schienenprofils beweglich aufnehmbar ist, und eine Wartungsschiene (120) mit einer zweiten Lauffläche (121), auf welcher das Wartungsmodul in Längsrichtung des Schienenprofils beweglich aufnehmbar ist, wobei die Solarmodulschiene und die Wartungsschiene im Wesentlichen parallel zueinander sowie derart relativ zueinander angeordnet sind, dass das Solarmodul und das Wartungsmodul in Längsrichtung des Schienenprofils unabhängig voneinander bewegbar sind. Die Erfindung bezieht sich zudem auf ein Schienensystem (200), ein Tragwerkmodul (300) sowie ein modulares Tragwerksystem (400) und ein dezentrales Kraftwerk, welche je mehrere der erfindungsgemässen Schienenprofile umfassen.

## Beschreibung

### Technisches Gebiet der Erfindung

Die Erfindung bezieht sich auf ein Schienenprofil zur Aufnahme zumindest eines Solarmoduls und zumindest eines Wartungsmoduls, welches Solarmodul und Wartungsmodul auf dem Schienenprofil in dessen Längsrichtung unabhängig voneinander bewegbar sind. Die Erfindung bezieht sich zudem auf ein Schienensystem, ein Tragwerkmodul sowie ein modulares Tragwerksystem und ein dezentrales Kraftwerk, welche je mehrere der erfindungsgemässen Schienenprofile umfassen.

### Stand der Technik

Solarpaneele unterschiedlicher Bauart werden seit Jahren an Privatbauten, Gebäudekomplexen, Bauten der öffentlichen Hand, an oder auf Gebäudeflächen von Gewerbe- und Industriebauten, über Agrar- und Grünflächen, in Wüstengebieten und bis in den alpinen Raum zur Gewinnung von Elektrizität eingesetzt.

Üblicherweise werden Solarpaneele an bzw. auf einer Unterkonstruktion befestigt, welche Unterkonstruktion wiederum an einer Stützstruktur, wie beispielsweise dem Dach eines Gebäudes, angebracht wird. Die Unterkonstruktion wird hierbei in der Regel vollständig von den Solarpaneelen überdeckt.

Hersteller von Solarpaneelen bieten häufig passende Unterkonstruktionen zu ihren Solarpaneelen an, was jedoch zu einer Vielzahl verfügbarer Systeme am Markt geführt hat, welche mitunter nicht miteinander kombinierbar sind.

In aller Regel wird eine solche Unterkonstruktion an der Stützstruktur montiert und die Solarpaneele wiederum einzeln auf der Unterkonstruktionen montiert. Dies bedingt, dass Monteure einen Grossteil der Montagezeit in einer exponierten, d.h. absturzgefährdeten und den Elementen ausgesetzten, Arbeitsposition verbringen müssen.

Aus EP3641129A1 und EP2413381A2 sind Unterkonstruktionen bekannt, deren Ziel es ist, die Montagezeit in der exponierten Arbeitsposition zu verringern, indem mehrere Solarpaneele abseits der Unterkonstruktion als Baugruppe vormontiert werden und die vormontierte Baugruppe auf die Unterkonstruktion aufgesetzt bzw. aufgeschoben wird.

### Zusammenfassung der Erfindung

Ziel der vorliegenden Erfindung ist es, eine Lösung für die zuvor beschriebenen Nachteile bei der Montage von Solarmodulen bereitzustellen, welche zudem eine Möglichkeit bietet, die Wartung der Solarmodule nach der Montage zu erleichtern. Erreicht wird dies mit einem Schienenprofil gemäss Patentanspruch 1 respektive einem Schienensystem gemäss Patentanspruch 10.

Ein Solarmodul im Sinne der vorliegenden Erfindung ist nicht beschränkend auszulegen und kann sowohl als einzelnes Solarpaneel sowie als zusammengesetzte Baugruppe aus mehreren Solarpaneelen verstanden werden.

Erfindungsgemäss wird ein Schienenprofil zur Aufnahme zumindest eines Solarmoduls und zumindest eines Wartungsmoduls bereitgestellt, welches Schienenprofil eine Basis mit einer Grundfläche und, an der Grundfläche angeordnet, eine Solarmodulschiene mit einer ersten Lauffläche, auf welcher das Solarmodul in Längsrichtung des Schienenprofils beweglich aufnehmbar ist, und eine Wartungsschiene mit einer zweiten Lauffläche, auf welcher das Wartungsmodul in Längsrichtung des Schienenprofils beweglich aufnehmbar ist, umfasst und wobei die Solarmodulschiene und die Wartungsschiene im Wesentlichen parallel zueinander sowie derart relativ zueinander angeordnet sind, dass das Solarmodul und das Wartungsmodul in Längsrichtung des Schienenprofils unabhängig voneinander bewegbar sind.

Das Schienenprofil ist mittels bekannter Verbindungsmittel an einer Stützstruktur, einem Balkengerüst, einem Dach, o.ä. montierbar und erstreckt sich entlang einer Längsrichtung, welche in diesem Fall im Wesentlichen parallel zu der Stützstruktur, dem Balkengerüst oder dem Dach verläuft. Das Schienenprofil weist an der Basis, gegenüberliegend der Grundfläche, eine Unterseite auf, welche Unterseite bei der Montage des Schienenprofils an der Stützstruktur, dem Balkengerüst oder dem Dach vorzugsweise gegen diese bzw. dieses weist. Das Schienenprofil kann zudem als Abschluss der Stützstruktur, des Balkengerüsts oder des Dachs dienen und dieses bzw. diese gegenüber eindringender Feuchtigkeit verschliessen. Zu diesem Zweck kann die Unterseite Abkantungen und/oder Falze umfassen.

Die Solarmodulschiene und die Wartungsschiene sind jeweils ausgebildet als ein Steg mit einem Fussbereich, welcher an der Grundfläche der Basis angeordnet ist, und mit einem Kopfbereich, welche die erste bzw. die zweite Lauffläche umfasst. Vorzugsweise haben der Steg der Solarmodulschiene und der Steg der Wartungsschiene einen länglichen Querschnitt, wobei die lange Seite dieses Querschnitts den Abstand der ersten bzw. zweiten Lauffläche von der Basis bestimmt. Der Steg der Solarmodulschiene und der Steg der Wartungsschiene können den gleichen Querschnitt oder einen unterschiedlichen Querschnitt aufweisen.

Vorzugsweise ist der Kopfbereich der Solarmodulschiene und/oder der Wartungsschiene abgerundet, d.h. die erste bzw. zweite Lauffläche sind konvex zylindrisch, sodass das Solarmodul bzw. das Wartungsmodul beispielsweise mittels bekannter U-förmiger Rollen auf diesen bewegbar ist.

Um ein Abkippen des Solarmoduls und/oder des Wartungsmoduls um die Längsachse der Solarmodulschiene zu verhindern, kann der Kopfbereich der Solarmodulschiene und/oder der Wartungsschiene mit einem Überstand versehen sein, wobei die erste und/oder zweite Lauffläche in diesem Fall pilzförmig oder T-förmig ist. Alternativ kann der Kopfbereich der Solarmodulschiene und/oder der Wartungsschiene jedoch auch derart gestaltet sein, dass die erste bzw. zweite Lauffläche konkav zylindrisch, U-förmig, C-förmig oder V-förmig ist.

Vorzugsweise ist der Steg der Solarmodulschiene und/oder der Wartungsschiene mit Fuss- und Kopfbereich einstückig ausgebildet. Es ist jedoch auch denkbar, dass der Kopfbereich als separates Element ausgebildet ist und an dem Steg montiert, beispielsweise angeschraubt, wird. Ebenso ist denkbar, dass der Fussbereich als separates Element ausgebildet ist und an dem Steg montiert, beispielsweise angeschraubt, wird oder aber, dass zwischen Fussbereich des Stegs und der Grundfläche weitere Elemente angeordnet sind, beispielsweise Ausgleichselemente und/oder Dichtelemente.

Die Wartungsschiene wird von dem Solarmodul während der Montage und im montierten Zustand nicht überdeckt. Die Wartungsschiene erlaubt folglich eine Bewegbarkeit des Wartungsmoduls unabhängig von dem Solarmodul, wodurch das Wartungsmodul sowohl während der Montage des Solarmoduls sowie nach erfolgter Montage zur Wartung des Solarmoduls einsetzbar ist.

Das Wartungsmodul kann entsprechend diesem Zweck ausgebildet sein und beispielsweise eine Arbeitsplattform für einen Monteur oder Wartungstechniker, eine manuell bedienbare oder automatische Reinigungsvorrichtung, eine Hebevorrichtung für ein Solarmodul oder weitere Vorrichtungen umfassen.

In einer ersten Ausführungsform der Erfindung umfasst das Schienenprofil eine erste Solarmodulschiene, auf welcher zumindest ein erstes Solarmodul in Längsrichtung des Schienenprofils beweglich aufnehmbar ist, und eine zweite Solarmodulschiene, auf welcher zumindest ein zweites Solarmodul in Längsrichtung des Schienenprofils beweglich aufnehmbar ist, wobei die Wartungsschiene zwischen der ersten und zweiten Solarmodulschiene angeordnet ist, sodass die Solarmodule und das Wartungsmodul in Längsrichtung des Schienenprofils unabhängig voneinander bewegbar sind.

Die Wartungsschiene wird von dem ersten und zweiten Solarmodul während der Montage und im montierten Zustand nicht überdeckt. Das Wartungsmodul ist daher auf der Wartungsschiene unabhängig von den Solarmodulen bewegbar und sowohl während der Montage der Solarmodule sowie nach erfolgter Montage zur Wartung der Solarmodule einsetzbar.

Die Anordnung der Wartungsschiene zwischen der ersten und zweiten Solarmodulschiene ermöglicht den Zugang zum ersten und zweiten Solarmodul von einem auf der Wartungsschiene bewegbaren Wartungsmodul.

Gemäss einer weiteren Ausführungsform der Erfindung umfasst das Schienenprofil zumindest eine, im Wesentlichen parallel zu der Solarmodulschiene oder den Solarmodulschienen und/oder der Wartungsschiene angeordnete Ablaufrinne.

Die Ablaufrinne dient dazu Wasser, welches von dem Schienenprofil abläuft, aufzufangen. Dies kann beispielsweise Regenwasser oder Wasser, welches zur Reinigung des Solarmoduls bzw. der Solarmodule verwendet wurde, sein. Das Wasser kann direkt auf das Schienenprofil auftreffen oder aber von dem Solarmodul bzw. den Solarmodulen auf das Schienenprofil ablaufen. Das mittels der Ablaufrinne aufgefangene Wasser kann gesammelt und beispielsweise zur Bewässerung von Pflanzen, zur Reinigung und/oder Kühlung des Solarmoduls bzw. der Solarmodule, zur Gewinnung von Wasserstoff mittels Elektrolyse verwendet oder aufgereinigt und weiteren Verwendungen zugeführt werden.

Der Steg der Solarmodulschiene bzw. Solarmodulschienen und/oder der Wartungsschiene kann eine oder mehrere Aussparungen, Bohrungen, o.ä. umfassen, sodass Wasser durch diese hindurch in die Ablaufrinne abfliessen kann. Die Aussparungen, Bohrungen, o.ä. sind derart dimensioniert und zueinander beabstandet, dass eine ausreichende Belastbarkeit des Schienenprofils zur Aufnahme eines Solarmoduls und eines Wartungsmoduls gewährleistet ist.

Nach einer weiteren vorteilhaften Ausführungsform ist die Grundfläche zu der Ablaufrinne geneigt. Hierdurch wird ein vollständiges Ablaufen von Wasser in die Ablaufrinne ermöglicht.

In weiter vorteilhafter Weise ist die erste Lauffläche in einem ersten Abstand von der Grundfläche beabstandet und die zweite Lauffläche in einem zweiten Abstand von der Grundfläche beabstandet, wobei der erste Abstand und der zweite Abstand im Wesentlichen identisch sind.

Insbesondere wenn die Grundfläche geneigt ist, erzeugt diese Ausführung eine in der Vertikalen gestaffelte Anordnung der Solarmodulschiene und der Wartungsschiene, wodurch ein Solarmodul und ein Wartungsmodul vereinfacht übereinander unabhängig voneinander bewegbar sind.

Nach einer ebenfalls vorteilhaften Ausführung sind die Materialstärke und/oder der Querschnitt der Solarmodulschiene oder der Solarmodulschienen und/oder der Wartungsschiene auf die Belastung durch das Solarmodul oder das Wartungsmodul angepasst.

Je nach Solarmodul und/oder Wartungsmodul kann die Masse, die das Schienenprofil aufnehmen muss, unterschiedlich sein. Ebenso können Witterungsbedingungen wie Wind, Schneelast, o.ä. oder die konkrete Anordnung der Schienenprofile, beispielsweise der Winkel gegen die Vertikale, in welchem diese montiert sind, die Belastung des Schienenprofils beeinflussen. Durch entsprechende Auslegung der Materialstärke und/oder des Querschnitts der Solarmodulschiene oder der Solarmodulschienen und/oder der Wartungsschiene kann ein optimaler Kompromiss aus Materialbedarf, Eigengewicht des Schienenprofils und Belastbarkeit des Schienenprofils erreicht werden. Es ist insbesondere auch möglich, dass die Solarmodulschiene bzw. die Solarmodulschienen und die Wartungsschiene eine unterschiedliche Materialstärke und/oder Querschnitt aufweisen.

Gemäss einer weiteren vorteilhaften Ausführung sind eine oder mehrere der Laufflächen hinsichtlich ihrer Abriebbeständigkeit und/oder Gleitfähigkeit angepasst.

Die Abriebbeständigkeit und/oder Gleitfähigkeit der Laufflächen kann beispielsweise durch die Materialauswahl oder durch eine Beschichtung gezielt eingestellt werden. Auf diese Weise können die Lebensdauer des Schienenprofils erhöht und der Energieaufwand zur Bewegung eines Solarmoduls und/oder eines Wartungsmoduls entlang des Schienenprofils reduziert werden. Insbesondere im Hinblick auf die Gleitfähigkeit kann so zudem der Bedarf an Schmiermitteln reduziert werden, was die Weiterverwendung des mittels der Ablaufrinne aufgefangenen Wassers vereinfacht.

Nach einer zusätzlichen Ausführungsform ist das Schienenprofil als einstückiges Schienenprofil umfassend die Basis, die Solarmodulschiene oder die Solarmodulschienen und die Wartungsschiene ausgebildet. Das einstückige Schienenprofil ist ohne weitere Zusammensetzungsarbeiten einsetzbar. Es kann beispielsweise kostengünstig im Extrusionsverfahren aus Metall, vorzugsweise Leichtmetall, hergestellt werden.

Nach einer alternativen Ausführungsform wird das Schienenprofil als Bausatz, umfassend zumindest die Basis, die Solarmodulschiene und die Wartungsschiene, bereitgestellt. Dies ermöglicht eine einfache Anpassung des Schienenprofils auf konkrete Randbedingungen, beispielsweise bezüglich bereits ausgewählter Solarmodule und/oder Wartungsmodule, oder auch eine nachträgliche Änderung dieser. Beispielsweise kann die Wartungsschiene nachträglich geändert werden, ohne die Solarmodulschiene(n) anpassen zu müssen oder gar das gesamte Schienenprofil tauschen zu müssen.

Ein zweiter Aspekt der vorliegenden Erfindung bezieht sich auf ein Schienensystem umfassend zumindest zwei Schienenprofile, welche Schienenprofile im Wesentlichen parallel zueinander angeordnet sind. Diese Anordnung erlaubt es, ein Solarmodul auf den Solarmodulschienen der zumindest zwei Schienenprofile anzuordnen und dieses entlang der Längsrichtung der Schienenprofile zu bewegen. Gleichermassen erlaubt diese Anordnung, ein Wartungsmodul auf den Wartungsschienen der zumindest zwei Schienenprofile anzuordnen und dieses entlang der Längsrichtung der Schienenprofile zu bewegen. Durch die Auflage auf zumindest zwei Solarmodulschienen bzw. Wartungsschienen wird einerseits die Kippgefahr um die Längsrichtung unterbunden und andererseits die Last des Solarmoduls bzw. des Wartungsmoduls auf die zumindest zwei Schienenprofile verteilt.

Ein weiterer Aspekt der Erfindung bezieht sich auf ein Tragwerkmodul umfassend ein erstes Schienensystem gemäss der vorliegenden Erfindung.

Das Tragwerkmodul umfasst zudem Stützen und ein, an einer ersten Seite der Stützen angeordnetes, Primärtragwerk. An dem Primärtragwerk kann zudem ein Sekundärtragwerk zur weiteren Unterteilung des Primärtragwerks angeordnet sein. Das erste Schienensystem kann an dem Primärtragwerk und/oder, falls vorhanden, dem Sekundärtragwerk montiert sein.

Bevorzugt sind die Stützen im Wesentlichen vertikal und das Primärtragwerk und das Sekundärtragwerk im Wesentlichen horizontal orientiert. Die Stützen sind, mittels bekannter Verbindungs- und Verankerungsmittel, an der, der ersten Seite gegenüberliegenden, zweiten Seite auf dem Boden oder an einem Gebäude fixiert. Im Folgenden wird der Fall beschrieben, dass das Tragwerkmodul auf dem Boden fixiert ist, jedoch sind alle beschriebenen Vorteile gleichermassen auch auf den Fall anwendbar, dass das Tragwerkmodul an oder auf einem Gebäude fixiert ist.

Das Tragwerkmodul mit darauf aufgenommenem Solarmodul dient als Witterungsschutz für die darunterliegende Fläche und erlaubt weiterhin die Nutzung dieser Fläche, beispielsweise als Anbaufläche für Pflanzen, als Verkehrs- oder Parkfläche für Fahrzeuge, als Aufenthaltsfläche, etc. Hierdurch wird der Flächennutzungsanteil und damit der Wirkungsgrad der Solarmodule pro Fläche erhöht.

Vor allem in Verbindung mit einem Schienensystem, dessen Schienenprofile eine Ablaufrinne umfassen, kann Regenwasser, welches auf die Solarmodule und das Schienensystem auftrifft, aufgefangen und weiterverwendet werden.

Um eine landwirtschaftliche, verkehrsmässige oder industrielle Nutzung der unter dem Tragwerkmodul befindlichen Fläche zu ermöglichen, kann das Primärtragwerk Spannweiten von bis zu 15 m überbrücken und die Stützen können eine freie Höhe des Primärtragwerks von über 4 m zur darunterliegenden Fläche erzeugen.

**In** vorteilhafter Weise umfasst das Tragwerkmodul zusätzlich eine Hebevorrichtung, auf welcher das Solarmodul und/oder das Wartungsmodul positionierbar und von welcher Hebevorrichtung das Solarmodul und/oder das Wartungsmodul auf das erste Schienensystem des Tragwerkmodul bewegbar ist.

Die Hebevorrichtung ist vorzugsweise an den Stützen des Tragwerkmodul angebracht und verfährt entlang dieser in deren Längsrichtung zwischen dem Boden und der Ebene des Primär- oder Sekundärtragwerks, d.h. der Ebene, in welcher das Schienensystem angeordnet ist. Zu diesem Zweck können die Stützen entsprechende Führungsschienen und Eingriffselemente für einen Linearantrieb, umfassen. Die Hebevorrichtung selbst umfasst einen Linearantrieb, welcher mit den Eingriffselementen zusammenwirkt um die Hebeplattform entlang der Stützen zu verfahren.

Es können ein oder mehrere Solarmodule am Boden vormontiert, verkabelt und getestet werden und mittels der Hebevorrichtung auf die Ebene des Schienensystems gefahren werden. Auf diese Weise können die Montagezeit, die Monteure in einer exponierten Position verbringen müssen, reduziert und die Effizienz bei der Montage von Solarmodulen erhöht werden.

Ebenfalls kann ein Wartungsmodul über die Hebeplattform vom Boden auf die Ebene des Schienensystems gefahren werden, was beispielsweise den Transfer eines einzigen Wartungsmoduls zwischen zwei oder mehr Tragwerkmodulen vereinfacht, sodass nicht jedes Wartungsmodul ein dediziertes Wartungsmodul benötigt.

In weiter vorteilhafter Weise umfasst die Hebevorrichtung zusätzlich ein zweites Schienensystem, wobei die Hebevorrichtung derart positionierbar ist, dass das zweite Schienensystem in Verlängerung des ersten Schienensystems angeordnet ist. Auf diese Weise kann ein Solarmodul oder ein Wartungsmodul, dass auf dem zweiten Schienensystem aufgenommen ist, auf das erste Schienensystem transferiert werden, ohne dass dieses hierfür angehoben werden muss. Die manuelle Arbeit der Monteure wird hierdurch weiter reduziert und die Effizienz bei der Montage erhöht.

Ein zusätzlicher Aspekt der Erfindung bezieht sich auf ein modulares Tragwerksystem umfassend eine Vielzahl von Tragwerksmodulen gemäss der Erfindung.

Die Vielzahl von Tragwerksmodulen kann schachbrettartig in einer ersten Richtung und in einer zweiten Richtung angeordnet sein. Durch entsprechende Auswahl der Anzahl an Tragwerksmodulen in der ersten bzw. der zweiten Richtung kann das modulare Tragwerksystem an die Dimensionen einer verfügbaren Fläche angepasst werden. Ebenfalls können die einzelnen Tragwerkmodule individualisiert sein, beispielsweise hinsichtlich der Spannweite des Primärtragwerks oder der Stützenlänge, sodass Unregelmässigkeiten wie zum Beispiel Strassen, Erhebungen, Bäume, etc. auf der verfügbaren Fläche überbrückt, umgangen oder ausgeglichen werden können.

In der ersten Richtung aneinander angrenzende Tragwerksmodule sind derart angeordnet, dass die jeweiligen Schienensysteme in Verlängerung voneinander angeordnet sind und ein Solarmodul und/oder Wartungsmodul ohne weitere Hilfsmittel von dem Schienensystem eines ersten Tragwerkmoduls auf das Schienensystem eines daran angrenzenden, zweiten Tragwerkmoduls bewegbar ist. Eine Verbindung der Schienensysteme untereinander mit Übergangsstücken o.ä. ist nicht notwendig, kann jedoch vorgesehen werden. Entlang der zweiten Richtung kann das modulare Tragwerksystem eine oder mehrere Montageplattformen umfassen, welche Montageplattformen über die Hebevorrichtung eines oder mehrerer Tragwerksmodule erreichbar sind und welche Montageplattformen dazu eingerichtet sind, dass ein Solarmodul und/oder Wartungsmodul von der Hebevorrichtung auf die Montageplattform bewegt und von diesem auf das Schienensystem eines Tragwerksmoduls bewegt wird.

Ein letzter Aspekt der Erfindung bezieht sich auf ein dezentrales Kraftwerk umfassend ein modulares Tragwerksystem im Sinne der vorliegenden Erfindung, eine Vielzahl von Solarmodulen und zumindest ein Wartungsmodul, welche Vielzahl von Solarmodulen und welches Wartungsmodul auf dem modularen Tragwerksystem aufgenommen sind und zumindest einen Stromabnehmer, welcher mit der Vielzahl von Solarmodulen elektrisch verbunden ist.

Das dezentrale Kraftwerk wandelt mittels der Solarmodule auf bekannte Weise Sonnenenergie in elektrische Energie um und speist hiermit den Stromabnehmer. Der Stromabnehmer kann eine Batterie sein oder ein Elektrolysemodul zur Gewinnung von Wasserstoff. Vorzugsweise kann zur Gewinnung von Wasserstoff das über die Ablaufrinnen des modularen Tragwerksystems gesammelte Wasser verwendet werden. Das dezentrale Kraftwerk kann weiter eine Speichervorrichtung für Wasserstoff, vorzugsweise eine drucklose Metallhydrid-Speichervorrichtung, und/oder eine Abgabevorrichtung zur Abgabe des Wasserstoffs an Fahrzeuge und/oder eine Brennstoffzelle zur Umwandlung der im Wasserstoff gespeicherten chemischen Energie in elektrische Energie umfassen.

Durch das modulare Tragwerksystem ist die Fläche unter den Solarmodulen des dezentralen Kraftwerks landwirtschaftlich, verkehrsmässig oder industriell nutzbar.

### Kurzbeschreibung der Zeichnungen

Eine Ausführungsform der Erfindung wird nachfolgend anhand der beiliegenden Zeichnung beispielhaft näher erläutert.

Es zeigt
Figur 1 eine erste Ausführungsform des erfindungsgemässen Schienenprofils im Querschnitt zur Längsrichtung,
Figur 2 eine schematische Darstellung eines Tragwerkmoduls nach einer ersten Ausführungsform,
Figur 3a eine schematische Darstellung des Tragwerkmoduls aus Figur 2 mit mehreren Solarmodulen und einem Wartungsmodul,
Figur 3b eine schematische Darstellung des Tragwerkmoduls aus Figur 2 mit mehreren Solarmodulen und mehreren Wartungsmodulen,
Figur 4a eine schematische Darstellung eines modularen Tragwerksystems,
Figur 4b eine zweite schematische Darstellung des modularen Tragwerksystems aus Figur 4a,
Figur 4c ein dezentrales Kraftwerk, und
Figur 5 einen Querschnitt einer Stütze eingerichtet zur Verwendung mit einer Hebevorrichtung.

### Bevorzugte Ausführungsformen der Erfindung

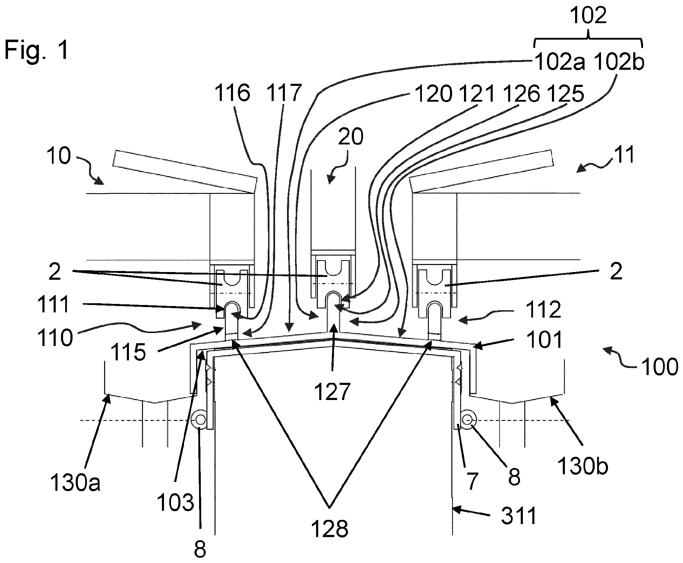

Eine Ausführungsform des erfindungsgemässen Schienenprofils 100 ist im Querschnitt zur Längsrichtung in Figur 1 erkennbar. Das einstückige Schienenprofil 100 umfasst eine Wartungsschiene 120 sowie parallel dazu eine erste Solarmodulschiene 110 und eine zweite Solarmodulschiene 112 und ist an einem nur angeschnitten dargestellten Träger 311 angebracht. Die Wartungsschiene 120 ist zwischen der ersten und zweiten Solarmodulschiene 110, 112 angeordnet.

Die erste Solarmodulschiene 110 ist ausgebildet als ein Steg 115 mit einem Fussbereich 117 und einem Kopfbereich 116, welcher Kopfbereich 116 die erste Lauffläche 111 umfasst, welche sich entlang der Längsrichtung als konvex zylindrisch Oberfläche erstreckt. Die zweite Solarmodulschiene 112 ist identisch zur ersten Solarmodulschiene 110 gestaltet. Die Wartungsschiene 120 ist ebenfalls ausgebildet als ein Steg 125 mit einem Fussbereich 127 und einem Kopfbereich 126, welcher Kopfbereich 126 die zweite Lauffläche 121 umfasst, welche sich entlang der Längsrichtung als konvex zylindrisch Oberfläche erstreckt. Der Querschnitt der Stege 115 und 125 ist identisch, alternativ sind jedoch auch unterschiedliche Querschnitte der Stege 115 und 125 denkbar.

Auf der ersten Solarmodulschiene 110 ist ein erstes Solarmodul 10 und auf der zweiten Solarmodulschiene 112 ein zweites Solarmodul 11 und auf der Wartungsschiene 120 ein Wartungsmodul 20 aufgenommen, welche Solarmodule 10, 11 bzw. welches Wartungsmodul 20 mittels Rollen 2, welche auf der ersten bzw. zweiten Lauffläche 111, 121 abrollen, unabhängig voneinander bewegbar sind.

Das Schienenprofil 100 umfasst ferner eine erste Ablaufrinne 130a und eine zweite Ablaufrinne 130b, welche Ablaufrinnen 130a, 130b parallel der ersten und zweiten Solarmodulschiene 110, 112 und der Wartungsschiene 120 angeordnet und an der Basis 101 der Schienenprofils 100 angebracht sind. Die Basis 101 ist derart gestaltet, dass die Oberseite des Trägers 311 vollständig von der Basis 101 abgedeckt wird und, dass ein erster Abschnitt 102a der Grundfläche 102 zur ersten Ablaufrinne 130a geneigt ist und ein zweiter Abschnitt 102b der Grundfläche 102 zur zweiten Ablaufrinne 130b geneigt ist. Somit weist die Grundfläche 102, die aus den geneigten ersten und zweiten Abschnitten 102a, 102b besteht, eine umgekehrte V-Form auf. Die Ablaufrinnen 130a, 130b sind an das Basis 101 angebracht, sodass Wasser von den Abschnitten 102a, 102b der Grundfläche 102 in die Ablaufrinnen 130a, 130b abfliesst. Die Solarmodulschienen 110, 112 weisen zu diesem Zweck Aussparungen 128 in regelmässigen Abständen in der Längsrichtung des Schienenprofils 100 auf.

Zwischen dem Schienenprofil 100 und dem Träger 311 ist ein Blech 7 vorgesehen, welches Ösen 8 zur Anbringung von beispielsweise einem Sicherheitsnetz umfasst. Es ist jedoch auch möglich, auf das Blech 7 und die Ösen 8 zu verzichten oder auf das Blech 7 zu verzichten und die Ösen 8 an dem Schienenprofil 100 selbst vorzusehen.

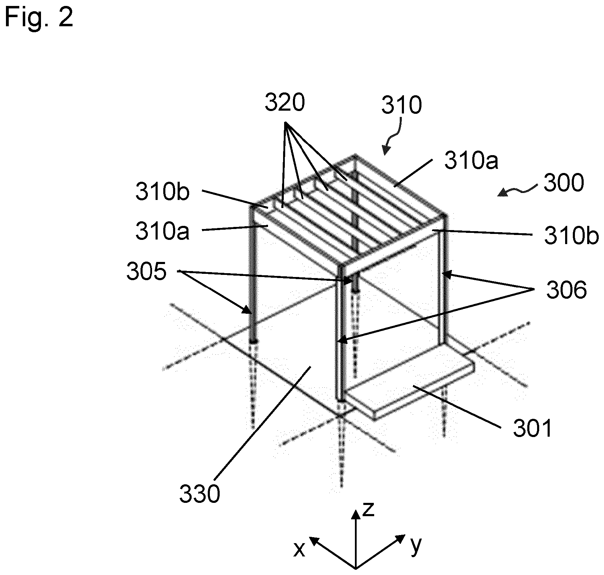

Figur 2 zeigt eine schematische Darstellung eines Tragwerkmoduls 300 nach einer ersten Ausführungsform der Erfindung, welches Tragwerkmodul zwei Stützen eines ersten Typs 305 und zwei Stützen eines zweiten Typs 306, ein Primärtragwerk 310 mit Längsträgern 310a und Querträgern 310b, ein Sekundärtragwerk 320, eine Hebevorrichtung 301 und ein erstes Schienensystem (nicht dargestellt) umfasst. Das Tragwerkmodul ist mittels bekannter Verankerungsmittel am Boden befestigt und überdeckt die Fläche 330. Das erste Schienensystem umfasst sechs Schienenprofile (nicht dargestellt), welche parallel zueinander angeordnet auf den Längsträgern 310a des Primärtragwerks 310 bzw. dem Sekundärtragwerk 320 angebracht sind.

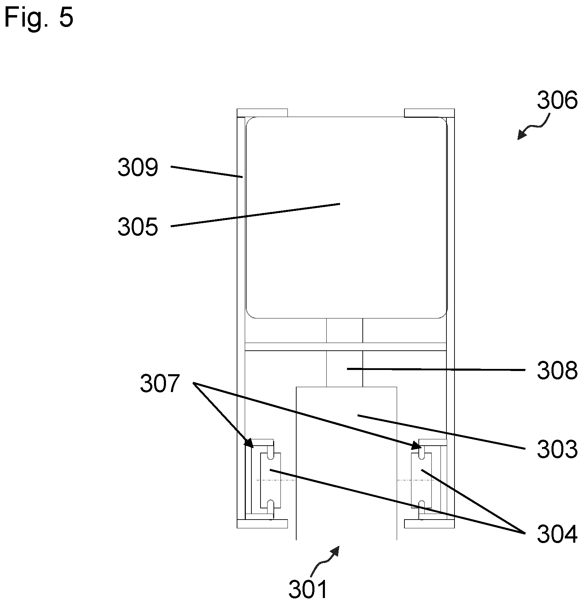

Die Hebevorrichtung 301 ist an den Stützen des zweiten Typs 306 angebracht und verfährt entlang dieser in deren Längsrichtung zwischen dem Boden und der Ebene des Primär bzw. Sekundärtragwerks. Die Gestaltung der Stützen des zweiten Typs 306 wird in Zusammenhang mit Figur 5 genauer erläutert.

Auf der Hebevorrichtung 301 ist ein Solarmodul 10 und/oder ein Wartungsmodul 20 positionierbar, welches mittels der Hebevorrichtung vom Boden in die Ebene des Primärtragwerks verfahren werden kann. Dies erlaubt beispielsweise eine Vormontage des Solarmoduls 10 am Boden, sodass die Montagezeit in exponierter Arbeitsposition, d.h. in der Ebene des Primär- bzw. Sekundärtragwerks reduziert wird. Das vormontierte Solarmodul 10 oder das Wartungsmodul 20 können von der Hebeplattform auf das am Primär- bzw. Sekundärtragwerk angebrachte erste Schienensystem aufgeschoben werden. Zur weiteren Erleichterung dieses Vorgangs kann die Hebeplattform 301 ein zweites Schienensystem (nicht dargestellt) umfassen, welches in Verlängerung des ersten Schienensystems angeordnet ist, insofern sich die Hebeplattform 301 in der Ebene des Primär- bzw. Sekundärtragwerks befindet.

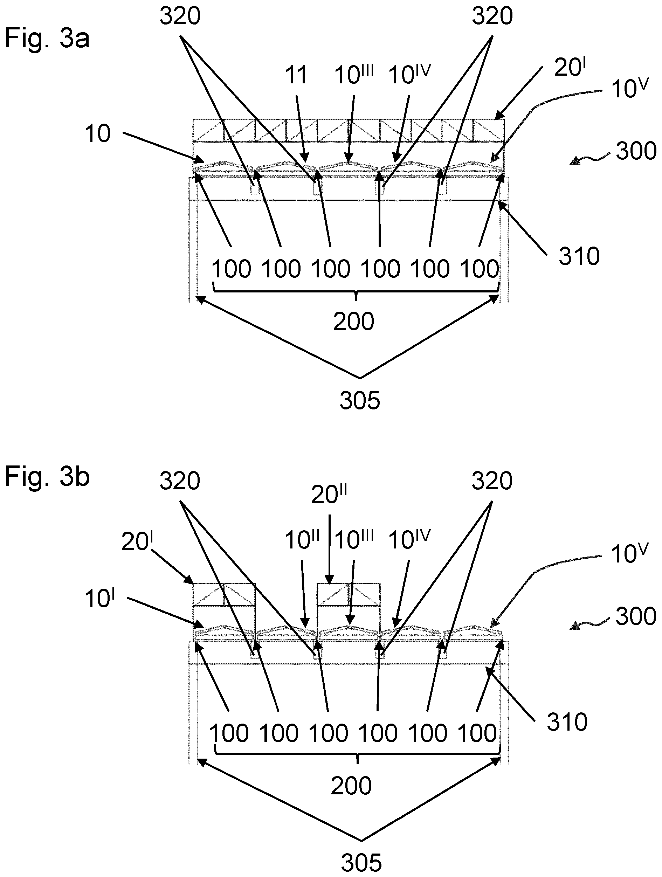

Die Figuren 3a und 3b zeigen einen Querschnitt des Tragwerkmoduls 300 in Längsrichtung der Schienenprofile 100 des ersten Schienensystems 200. Auf den Schienenprofilen 100 sind Reihen 10^{I} bis 10^{V} von Solarmodulen aufgenommen. Figur 3a zeigt zudem ein Wartungsmodul 20^{I}, welches auf den äusseren Schienenprofilen des Schienensystems 200, d.h. den Schienenprofilen 100, welche auf den Längsträgern 310a angebracht sind, aufgenommen ist und alle Reihen 10^{I} bis 10^{V} von Solarmodulen überbrückt, d.h. von welchem alle Reihen 10^{I} bis 10^{V} erreichbar sind. Figur 3b zeigt eine alternative Ausführung, wobei mehrere Wartungsmodule 20^{II} und 20^{III} vorgesehen sind, welche auf jeweils zwei benachbarten Schienenprofilen des Schienensystems 200 aufgenommen und unabhängig voneinander bewegbar sind. Jedes der Wartungsmodule 20^{II} und 20^{III} überbrückt lediglich eine Reihe von Solarmodulen.

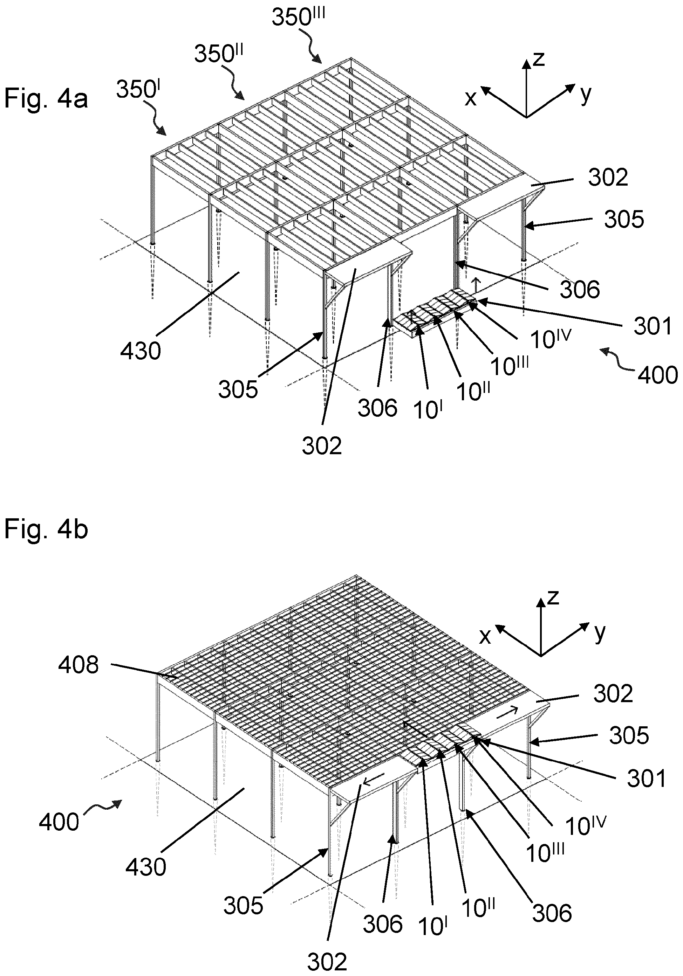

In den Figuren 4a und 4b ist ein modulares Tragwerksystem 400 nach einem Aspekt der vorliegenden Erfindung dargestellt, welches die Fläche 430 überdeckt. Das modulare Tragwerksystem 400 umfasst in einer ersten Reihe 350^{I}, einer zweiten Reihe 350^{II} und einer dritten Reihe 350^{III} je drei Tragwerkmodule 300, die Anzahl der Reihen und der Tragwerkmodule je Reihe ist jedoch grundsätzlich an die Dimensionen einer verfügbaren Fläche anpassbar und kann auch unterhalb oder oberhalb der dargestellten neun Tragwerkmodule liegen.

Jedes der Tragwerkmodule umfasst ein Primärtragwerk, ein Sekundärtragwerk und ein erstes Schienensystem (nicht dargestellt), wobei die Schienenprofile der ersten Schienensysteme jeweils Längsrichtung der Reihen 350^{I}, 350^{II}, 350^{III} verlaufen. Die jeweiligen ersten Schienensysteme der Tragwerkmodule einer Reihe sind in Verlängerung voneinander angeordnet, sodass ein Solarmodul und/oder Wartungsmodul ohne weitere Hilfsmittel von dem ersten Schienensystem eines ersten Tragwerkmoduls auf das erste Schienensystem eines daran angrenzenden, zweiten Tragwerkmoduls bewegbar ist.

Das modulare Tragwerksystem umfasst zudem eine Hebevorrichtung 301 sowie zwei Montageplattformen 302. Solarmodule und/oder Wartungsmodule können wie zuvor beschrieben und in Figur 4a dargestellt am Boden auf der Hebevorrichtung 301 positioniert und mittels dieser vom Boden auf die Ebene der Primär- bzw. Sekundärtragwerke verfahren werden. Insofern die Hebevorrichtung 301, wie in Figur 4b dargestellt, in die Ebene der Primär- bzw. Sekundärtragwerke verfahren ist, kann ein darauf positioniertes Solarmodul und/oder Wartungsmodul auf das erste Schienensystem des angrenzenden Tragwerkmoduls in Reihe 350^{II} oder aber auf eine der angrenzenden Montageplattformen 302 und von dieser auf das erste Schienensystem der daran angrenzenden Tragwerkmodule der Reihen 350^{I} bzw. 350^{III} aufgeschoben werden.

Das modulare Tragwerksystem 400 kann optional, wie in Figur 4b gezeigt, mit einem Sicherungsnetz 408 versehen werden, sodass beispielsweise Monteure bei der Montage von Solarmodule gegen ein Abstürzen gesichert sind.

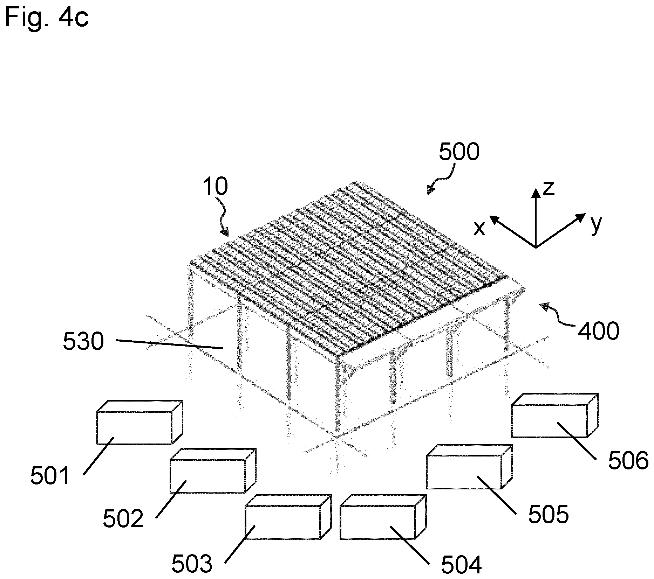

Figur 4c zeigt eine schematische Darstellung eines dezentralen Kraftwerks 500, welches ein modulares Tragwerksystem 400, eine Vielzahl von Solarmodulen 10 und zumindest ein Wartungsmodul (nicht dargestellt), welche Vielzahl von Solarmodulen 10 und welches Wartungsmodul auf dem modularen Tragwerksystem 400 aufgenommen sind, umfasst.

Das dezentrale Kraftwerk 500 umfasst ferner eine Batterie 501, ein Elektrolysemodul 502 zur Gewinnung von Wasserstoff, eine Speichervorrichtung 503 für Wasserstoff, eine Abgabevorrichtung 504 zur Abgabe des Wasserstoffs an Fahrzeuge und ein Brennstoffzellenmodul 505 zur Umwandlung der im Wasserstoff gespeicherten chemischen Energie in elektrische Energie sowie einen Tank 506, in welchem Wasserstoff transportierbar gespeichert werden kann. Die elektrische bzw. fluidleitende Verbindung zwischen dem dezentralen Kraftwerk 500 und den Modulen 501 bis 506 respektive zwischen manchen der Modulen 501 bis 506 untereinander ist der Übersicht halber nicht dargestellt.

Die von dem dezentralen Kraftwerk 500 überdeckte Fläche 530 ist landwirtschaftlich, verkehrsmässig oder industriell weiterhin nutzbar.

In Figur 5 ist ein Querschnitt einer Stütze des zweiten Typs 306 eingerichtet zur Verwendung mit einer Hebevorrichtung 301 dargestellt. Die Stütze des zweiten Typs 306 umfasst eine Stütze des ersten Typs 305 und umfasst ferner einen Rahmen 309, welcher an der Stütze des ersten Typs 305 angebracht ist und diese teilweise umschliesst und verstärkt. Der Rahmen 309 beinhaltet ferner Führungsschienen 307 zur Führung der Bewegung der Hebevorrichtung 301 entlang der Stütze des zweiten Typs 306 sowie Eingriffselemente für einen Linearantrieb, welche als Zahnstange 308 ausgebildet sind. Die Hebevorrichtung 301 wiederum umfasst Gleitelemente, ausgebildet als Rollen 304, welche in den Führungsschienen 307 abrollen und einen Linearantrieb 303, welcher die Hebevorrichtung 301 durch Eingriff mit der Zahnstange 308 entlang der Stütze des zweiten Typs 306 bewegen kann.

## Patentansprüche

1. Schienenprofil (100) zur Aufnahme zumindest eines Solarmoduls (10) und zumindest eines Wartungsmoduls (20) umfassend eine Basis (101) mit einer Grundfläche (102) und an der Grundfläche (102) angeordnet eine Solarmodulschiene (110) mit einer ersten Lauffläche (111), auf welcher das Solarmodul (10) in Längsrichtung des Schienenprofils (100) beweglich aufnehmbar ist, und eine Wartungsschiene (120) mit einer zweiten Lauffläche (121), auf welcher das Wartungsmodul (20) in Längsrichtung des Schienenprofils (100) beweglich aufnehmbar ist, wobei die Solarmodulschiene (110) und die Wartungsschiene (120) im Wesentlichen parallel zueinander sowie derart relativ zueinander angeordnet sind, dass das Solarmodul (10) und das Wartungsmodul (20) in Längsrichtung des Schienenprofils (100) unabhängig voneinander bewegbar sind.

2. Schienenprofil (100) nach Anspruch 1 umfassend eine erste Solarmodulschiene (110), auf welcher zumindest ein erstes Solarmodul (10) in Längsrichtung des Schienenprofils (100) beweglich aufnehmbar ist, und eine zweite Solarmodulschiene (112), auf welcher zumindest ein zweites Solarmodul (11) in Längsrichtung des Schienenprofils (100) beweglich aufnehmbar ist, und wobei die Wartungsschiene (120) zwischen der ersten und zweiten Solarmodulschiene (110, 112) angeordnet ist, sodass die Solarmodule (10, 11) und das Wartungsmodul (20) in Längsrichtung des Schienenprofils (100) unabhängig voneinander bewegbar sind.

3. Schienenprofil (100) nach einem der Ansprüche 1 oder 23, wobei das Schienenprofil (100) zumindest eine, im Wesentlichen parallel zu der Solarmodulschiene (110) oder den Solarmodulschienen (110, 112) und/oder der Wartungsschiene (120) angeordnete Ablaufrinne (130) umfasst.

4. Schienenprofil (100) nach Anspruch 3, wobei die Grundfläche (102) zu der Ablaufrinne (130) geneigt ist.

5. Schienenprofil (100) nach einem der Ansprüche 1 bis 4, wobei die erste Lauffläche (111) in einem ersten Abstand (113) von der Grundfläche (102) beabstandet ist und die zweite Lauffläche (121) in einem zweiten Abstand (123) von der Grundfläche (102) beabstandet ist, und wobei der erste Abstand (113) und der zweite Abstand (123) im Wesentlichen identisch sind.

6. Schienenprofil (100) nach einem der vorherigen Ansprüche, wobei die Materialstärke und/oder der Querschnitt der Solarmodulschiene (110) oder der Solarmodulschienen (110, 112) und/oder der Wartungsschiene (120) auf die Belastung durch das Solarmodul (10) oder das Wartungsmodul (20) angepasst sind.

7. Schienenprofil (100) nach einem der vorherigen Ansprüche, wobei eine oder mehrere der Laufflächen (111, 121) hinsichtlich ihrer Abriebbeständigkeit und/oder Gleitfähigkeit angepasst sind.

8. Schienenprofil (100) nach einem der vorherigen Ansprüche, wobei das Schienenprofil (100) als einstückiges Schienenprofil umfassend die Basis (101), die Solarmodulschiene (110) oder die Solarmodulschienen (110, 112) und die Wartungsschiene (120) ausgebildet ist.

9. Bausatz für Schienenprofil nach einem der Ansprüche 1 bis 8, umfassend zumindest die Basis (101), die Solarmodulschiene (110) und die Wartungsschiene (120).

10. Schienensystem (200) umfassend zumindest zwei Schienenprofile (100) gemäss einem der Ansprüche 1 bis 9, welche Schienenprofile (100) im Wesentlichen parallel zueinander angeordnet sind.

11. Tragwerkmodul (300) umfassend ein erstes Schienensystem (200) nach Anspruch 10.

12. Tragwerkmodul (300) nach Anspruch 11, wobei das Tragwerkmodul (300) zusätzlich eine Hebevorrichtung (301) umfasst, auf welcher das Solarmodul (10) und/oder das Wartungsmodul (20) positionierbar und von welcher Hebevorrichtung (301) das Solarmodul (10) und/oder das Wartungsmodul (20) auf das erste Schienensystem (200) des Tragwerkmodul (300) bewegbar ist.

13. Tragwerkmodul (300) nach Anspruch 12, wobei die Hebevorrichtung (301) zusätzlich ein zweites Schienensystem (200) nach Anspruch 6 umfasst, und wobei die Hebevorrichtung (301) derart positionierbar ist, dass das zweite Schienensystem (200) in Verlängerung des ersten Schienensystems (200) angeordnet ist.

14. Modulares Tragwerksystem (400) umfassend eine Vielzahl von Tragwerksmodulen (300) gemäss einem der Ansprüche 11 bis 13.

15. Dezentrales Kraftwerk umfassend ein modulares Tragwerksystem (400) nach Anspruch 14, eine Vielzahl von Solarmodulen (10) und zumindest ein Wartungsmodul (20), welche Vielzahl von Solarmodulen (10) und welches Wartungsmodul (20) auf dem modularen Tragwerksystem (400) aufgenommen sind und zumindest einen Stromabnehmer, welcher mit der Vielzahl von Solarmodulen elektrisch verbunden ist.
